# EUROPÄISCHE PATENTANMELDUNG

(11) **EP 1 431 235 A2**
(43) Veröffentlichungstag der Anmeldung: **23.06.2004**
(21) Anmeldenummer: 03028081.2
(22) Anmeldetag: 09.12.2003
(51) Int. Cl.: B66C 13/12, F16L 3/015, F16L 3/18, F16L 3/20

(54) **Anschlusselement für ein Hydraulikaggregat**

(30) Priorität: 16.12.2002 DE 10259013
(71) Anmelder: Faller, Hans-Peter, 88299 Leutkirch im Allgäu (DE)
(72) Erfinder: Faller, Hans-Peter, 88299 Leutkirch im Allgäu (DE)
(74) Vertreter: Pfister, Stefan Helmut Ulrich

(57) **Zusammenfassung**

Die Erfindung betrifft ein Anschlußelement für ein Hydraulikaggregat, beispielsweise eine Hydraulikpumpe oder dergleichen, zum Verbinden mit einem hydraulisch betriebenen Element wie einem Hydraulikzylinder, wobei das Anschlußelement Bewegungen zwischen dem Hydraulikaggregat und dem hydraulisch betriebenen Element zuläßt. Das Anschlußelement besteht aus Hydraulikschläuchen und einer schwenkbaren Deichsel, wobei die Schläuche an der Deichsel im Wesentlichen parallel entlanggeführt sind und die Deichsel einen querverschieblichen Führungshalter für die Schläuche aufweist.

## Beschreibung

Die Erfindung betrifft ein Anschlußelement für ein Hydraulikaggregat, beispielsweise eine Hydraulikpumpe oder dergleichen, zum Verbinden mit einem hydraulisch betriebenen Element wie einem Hydraulikzylinder, wobei das Anschlußelement Bewegungen zwischen dem Hydraulikaggregat und dem hydraulisch betriebenen Element zuläßt. Das Anschlußelement besteht aus Hydraulikschläuchen und einer schwenkbaren Deichsel, wobei die Schläuche an der Deichsel im Wesentlichen parallel entlanggeführt sind und die Deichsel einen Führungshalter für die Schläuche aufweist.

Typischerweise werden entsprechende Anschlußelemente bei Kraftfahrzeugen wie Lastkraftwagen mit Anhängern eingesetzt. Die Hydraulikpumpe befindet sich zum Beispiel im Bereich des Motors, der Hydraulikzylinder zum Beispiel für ein Hebemittel befindet sich auf dem Anhänger. Das Anschlußelement stellt eine gelenkige Verbindung zwischen den jeweiligen Hydraulikleitungen auf dem Hänger beziehungsweise dem Fahrzeug her.

Im einfachsten Fall besteht ein derartiges Anschlußelement aus nur einem Hydraulikschlauch, der das Aggregat mit dem Hydraulikelement verbindet. Es ist dabei günstig, den Schlauch oder die Schläuche, die eine beträchtliche Länge aufweisen, zu unterstützen, so dass sie nicht allzuweit durchhängen. Durchhängende Hydraulikschläuche könnten zur Folge haben, daß sie sich an Hindernissen verfangen. Dabei könnten die Schläuche beschädigt oder sogar abgerissen werden. Das hydraulisch betriebene Elemente wie zum Beispiel hydraulisch betriebene Bremsen würden versagen. Auch andere, hydraulisch betriebene Geräte auf dem Hänger könnten dann nicht mehr zuverlässig arbeiten.

Es ist deshalb bereits vorgeschlagen worden, die Schläuche an einer Deichsel entlangzuführen und sie dort am Ende auf einen Fingerhalten zu befestigen.

Auch dieser Vorschlag überzeugt noch nicht. Nach wie vor ist es möglich, daß die Schläuche an der Deichsel durchhängen und sich an anderen Elementen verfangen können. Des Weiteren ist hierbei von Nachteil, daß die Schläuche, gerade bei Verschwenkbewegungen der Deichsel, weit von dieser abstehen. Wird die Deichsel geschwenkt, so wird die im Schwenkradius innenliegende Schlauchleitung gestaucht beziehungsweise von der Deichsel weggedrückt, wohingegen der beim Schwenkradius außenliegende Schlauch gedehnt beziehungsweise gespannt wird. Die Belastung der Schläuche wird daher nicht reduziert, die Lösungen des Standes der Technik stellen nicht sicher, daß die Schläuche sich nicht am Fahrzeug verfangen und beschädigt werden.

Die Erfindung hat es sich zur Aufgabe gemacht, ein Anschlußelement, wie eingangs beschrieben, dahingehend zu verbessern, daß dieses zuverlässiger funktioniert und das Risiko einer Beschädigung des Schlauches reduziert ist.

Gelöst wird diese Aufgabe durch ein Anschlußelement wie eingangs beschrieben, bei welchem vorgeschlagen wird, daß der Führungshalter gegenüber des Deichsel verschiebbar ist.

Der Vorteil einer derartigen Anordnung des Führungshalters besteht darin, daß die schwenkende Bewegung der Deichsel über den Führungshalter zumindest teilweise ausgeglichen wird und so die Stauch- und Dehnbewegungen des Schlauches weitestgehend vermieden werden. Der Führungshalter vermeidet zuverlässig, daß die Schläuche gerade beim Abwinkeln durchhängen und so weit nach unten von der Deichsel abstehen.

Erfindungsgemäß ist dabei vorgesehen, daß der Führungshalter längs- und/oder querbeweglich bezüglich der Deichsel ist. Für den Ausgleich der jeweiligen Schlauchbewegungen beim Verschwenken der Deichsel ist es unter Umständen von Vorteil, die Führungshalter nicht nur bezüglich der Deichsel querbeweglich auszubilden, sondern auch auf der Deichsel längsbeweglich auszugestalten.

Im einfachsten Ausführungsbeispiel der Erfindung ist eine Öffnung vorgesehen, in der der Führungshalter in einer Richtung quer zur Deichsel verschiebbar ist. Günstigerweise befindet sich der Führungshalter hierbei nicht am Ende der Hydraulikleitung, sondern zwischen den jeweiligen Anschlußstücken, günstigerweise im mittleren Drittel der Deichsellänge. Dadurch wird eine optimale Unterstützung des Schlauches erreicht, ohne die Flexibilität und Beweglichkeit der Anordnung einzuschränken.

Nach einem weiteren Ausführungsbeispiel ist es möglich, eine Schiene zur Aufnahme des auf einem Schlitten auf der Schiene beweglich gelagerten Führungshalters anzuordnen, bei der ein unerwünschtes Verklemmen des Führungshalters verhindert werden kann. Die Schiene erstreckt sich hierbei ebenfalls quer zur Deichsel.

Die erfindungsgemäßen Vorschläge erlauben daher, daß der abgewinkelte Schlauch in dem Führungshalter entsprechend geführt wird und nicht ungeführt absteht und herunterhängt, wo er sich eventuell verhängen könnte.

Erfindungsgemäß wird die Aufgabe auch von einem auf der Deichsel längsbeweglichen Führungshalter gelöst. Auch eine solche Anordnung ist geeignet, eine flexible Unterstützung des Schlauches bei Abwinklungen zu ergeben. Günstigerweise besitzt die Deichsel eine entsprechende Führung für eine Bewegung des Führungshalters parallel zu ihr, mit jeweiligen endseitigen Anschlägen. Natürlich ist es möglich, eine entsprechende Überlagerung bei der Führung längs und rechtwinklig zur Deichsel im Führungshalter somit zu realisieren.

Insbesondere die Anordnung des Führungshalters quer zur Deichsel erlaubt es, die auftretenden Unterschiede der Schlauchlängen bei Abwinklungen in einfacher Weise zu kompensieren und gleichzeitig zu erreichen, daß die Schläuche im Wesentlichen in der gleichen Ebene verbleiben und so möglichst kollisions- und verhakfrei geführt werden. Werden aber die Schläuche entsprechend sicher geführt, so erhöht sich die Zuverlässigkeit des Hydrauliksystems entsprechend, da die Risiken minimiert werden, wo der Schlauch entspechend verletzt werden kann. Letztendlich ist es sogar möglich, den Schlauch in einfacher Weise zu realisieren, da dieser nicht mehr zusätzlich geschützt werden muß.

An seinen seitlichen Enden weist der Führungshalter Aufnahmen für die Hydraulikschläuche auf. Hierbei ist vorgesehen, daß der Führungshalter die Hydraulikschläuche festhält, das heißt, eine relative Beweglichkeit des Schlauches zum Führungshalter nicht möglich ist. Eine solche Anordnung kann einhergehen mit einer beweglichen Anordnung des Führungshalters auf der Deichsel. Alternativ ist es möglich, daß der Führungshalter immer noch eine Beweglichkeit des Schlauches im Führungshalter (fast parallel zur Deichsel) erlaubt und so entsprechende Schlauchbewegungen auszugleichen mithilft. Bei einer solchen Ausgestaltung ist es von Vorteil, daß an dem Führungshalter Rollen, zum Beispiel ein offenes Kugellager und dergleichen, für eine längsbewegliche Führung des Hydraulikschlauches vorgesehen sind. Auf diese Weise ist zwar der Hydraulikschlauch über seine Länge unterstützt, jedoch innerhalb der Führung relativ frei beweglich, so daß Ausgleichsbewegungen ohne allzugroße Belastung des Schlauches ausgeführt werden können.

Mit ihren einen Enden sind die Schläuche an dem Hydraulikaggregat angeschlossen und mit ihren anderen Enden an einem hydraulisch betriebenen Element. Dies kann auf direkte Weise oder über Verbindungsmittel, wie weitere kurze Schlauchabschnitte oder Flansche, erfolgen. Das Anschlußelement stellt nur einen Teilabschnitt der Verbindung zwischen Hydraulikaggregat und hydraulisch betriebenen Element dar.

Das erfindungsgemäße Anschlußelement ist vorteilhafterweise als nachrüstbares Modul ausgebildet. Es bietet sich daher an, das Anschlußelement als Einheit auszubilden, wobei vorzugsweise eine Tragplatte vorgesehen ist, auf welcher die Deichsel schwenkbar und/oder längsbeweglich gehalten ist. Darüberhinaus erlaubt die Ausgestaltung als Tragplatte auch, daß diese die Enden der Hydraulikschläuche aufnimmt und eine Anschlußmöglichkeit zum Aggregat bildet.

In einer bevorzugten Ausführungsform der Erfindung ist die Tragplatte in einer horizontalen Ebene ausgerichtet. Die Schwenkachse der Deichsel steht somit senkrecht zur Plattenebene. Auch die Hydraulikschläuche werden in einer Richtung senkrecht zur Tragplatte weggeführt. Die Schläuche werden also von der Tragplatte nach oben oder unten weggeführt und mit einem relativ großen Radius, damit sie nicht abknicken, in horizontale Richtung umgelenkt. Es ist vorteilhaft, daß derart angebrachte Schläuche in alle Richtungen gelenkt werden können, ohne beschädigt zu werden.

Es können jedoch auch zum Anschluß der Schläuche an der Tragplatte günstigerweise Fittinge, insbesondere abgewinkelte Fittinge, vorgesehen sein. Diese Fittinge ermöglichen es, den Biegeradius des Schlauches gegenüber der vorherigen Lösung zu verringern. Der Einsatz der Fittinge erlaubt auch eine platzsparendere Ausgestaltung der gesamten Anordnung, da die Schläuche näher bei der Deichsel umgelenkt werden können und von dieser nicht mehr so weit abstehen. Um eine Belastung des Schlauches beim Schwenken zu verringern, sind diese Fittinge vorteilhafterweise drehbar an der Tragplatte befestigt. Der Schwenkwinkel der Schläuche wird dann nur durch gegenseitige Kollision beziehungsweise durch den Schwenkwinkel der Deichsel begrenzt.

Es hat sich als günstig erwiesen, auch hier die Schwenkebene der Deichsel ober- oder unterhalb der Schwenkebene der Hydraulikschläuche anzuordnen, so daß sich Deichsel und Schläuche bei der Schwenkbewegung nicht gegenseitig beeinträchtigen oder behindern. Als Schwenkebene wird hierbei die Ebene bezeichnet, in welcher sich zum einen die Deichsel beziehungsweise zum anderen die Hydraulikschläuche bewegen, wenn diese verschwenkt werden. Für ein kollisionsfreies Verschwenken ist es dabei günstig, daß die Schwenkebene der Schläuche nicht mit der Schwenkebene der Deichsel zusammenfällt.

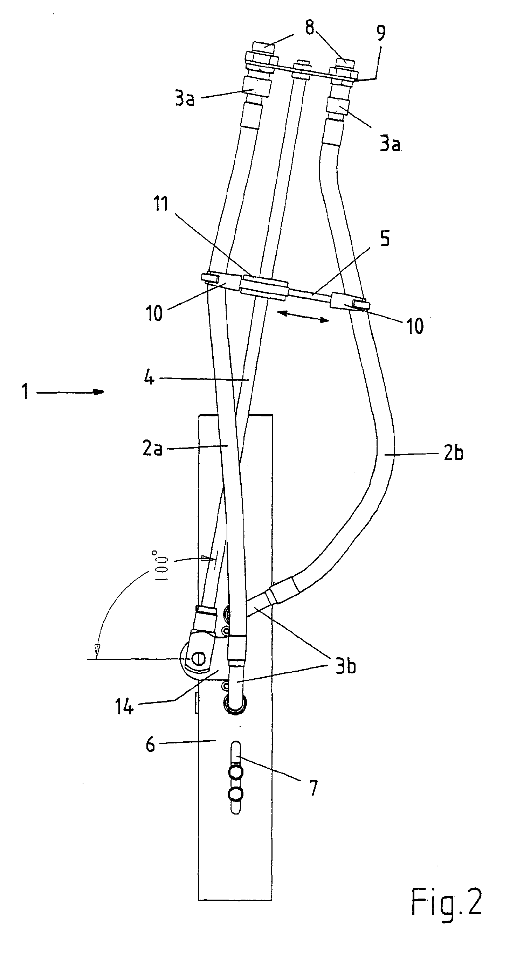

Es hat sich als vorteilhaft erwiesen, die Länge der Schläuche größer als die Länge der Deichsel auszubilden. Der beweglich ausgestaltete Führungshalter hält den Schlauch jeweils in der jeweiligen Ebene, ohne daß dieser durchhängt. Damit ein möglichst großer Schwenkradius erreicht werden kann ist es dabei von Vorteil, die Länge der Schläuche größer als die Länge der Deichsel auszubilden, vorausgesetzt, der Anschluß zu dem Hydraulikelement befindet sich am Ende der Deichsel. Der Vorteil dieser Ausgestaltung ergibt sich insbesondere aus Fig. 2. Der hinter der Halterung der Deichsel liegende Schlauch ist fast geradlienig angeordnet, wohingegen der vor der Halterung liegende Schlauch eine den kürzeren Weg kompensierende Ausbeulung beschreibt, wobei beide Schlauchenden auf gleicher Höhe enden. Auf diese Weise wird einem Schwenkbereich ermöglicht, der größer als 90° beträgt.

Es ist günstig, daß die Deichsel an ihrem der Tragplatte gegenüberliegenden Ende einen weiteren, als Anschlußplatte zur Verbindung des Anschlußelementes mit dem Hydraulikaggregat dienenden Führungshalter aufweist. Über diesen zweiten Führungshalter wird eine definierte Anschlußebene für einen Anschluß von Hydraulikleitungen an das Hydraulikaggregat geschaffen. Günstigerweise wird dieser Führungshalter am Deichselende feststehend als Anschlußplatte ausgebildet.

Die Tragplatte ist an dem Fahzeug befestigbar. Dazu sind Löcher vorgesehen, durch die Schrauben hindurchführbar sind. Insbesondere weisen die Löcher eine längliche Form (zum Beispiel Langloch) auf oder sind als Schlitze in Längs- oder Querrichtung der Platte ausgebildet, so daß die Platte gegenüber dem Befestigungselement, wie dem Fahrzeug selbst, ausrichtbar ist.

In einer bevorzugten Ausgestaltung der Erfindung ist vorgesehen, daß die Drehachse der Deichsel zwischen den Drehachsen der Fittinge und dem Führungshalter angeordnet ist. Auch diese Anordnung vermeidet die Gefahr einer Kollision zwischen der Deichsel und den Schläuchen und erhöht die Beweglichkeit des gesamten Anschlußelementes. Günstigerweise wird dies kombiniert mit einer Anordnung der Hydraulikschläuche in einer Schwenkebene, die nicht mit der Schwenkebene der Deichsel zusammenfällt. Bereits diese Maßnahmen, jeweils getrennt voneinander ausgeführt, ergeben bereits eine gewisse Erhöhung der Bewegungsmöglichkeit. Dabei ist gefunden worden, daß gerade durch die spezielle geometrische Anordnung, nämlich daß die Drehachse der Deichsel (bei nicht verschwenkter Deichsel) zwischen den Drehachsen der Fittinge und dem Führungshalter liegt, eine Verschwenkbarkeit von über 100° erreicht wird.

Bevorzugterweise werden an dem Anschlußelement zwei Hydraulikschläuche vorgesehen. Üblicherweise dient ein Hydraulikschlauch der Zu- und ein anderer der Ableitung von Hydraulikflüssigkeit.

Des Weiteren wird mit der Erfindung ein Anschlußelement nach dem Oberbegriff des ersten Anspruches beansprucht, bei dem ein Überdruckventil vorgesehen ist. Dieses Überdruckventil dient dazu, einen Druckausgleich zwischen beiden Hydraulikschläuchen herzustellen. Es ist dabei erfindungsgemäß vorgesehen, daß das Überdruckventil eine Verbindung zwischen den beiden Hydraulikschläuchen herstellt. Eine solche Anordnung dient dem Schutz der Hydraulikleitung aber auch des gesamten Hydrauliksystems. Üblicherweise wird eine Zu- und Ableitung vorgesehen, die durch das Überdruckventil verbunden werden. Besteht nun in der Zuleitung ein Überdruck, so kann dieser über das Überdruckventil in die Ableitung entweichen, die ihrerseits in der Regel mit einem Vorratsbehälter verbunden ist. Es ist vorteilhafterweise an der Tragplatte, insbesondere auf der Rückseite der Tragplatte angeordnet. Es wird von einem Gehäuse umgeben, welches das Überdruckventil vor Witterungseinflüssen schützt und somit eine sichere Funktion gewährleistet.

Ebenfalls wird ein Hydrauliksystem beansprucht, das aus einem Hydraulikaggregat und einem mit dem Aggregat verbundenen, hydraulisch betriebenen Element besteht, wobei ein Anschlußelement zum flexiblen Verbinden des Hydraulikaggregats mit dem hydraulisch betriebenen Element Verwendung findet, das die zuvor beschriebenen Merkmale aufweist.

In der Zeichnung ist die Erfindung schematisch dargestellt. Es zeigen:
- Fig. 1a: das erfindungsgemäße Anschlußelement in einer ersten, geraden Stellung in Draufsicht;
- Fig. 1b: das erfindungsgemäße Anschlußelement nach Fig. 1a in Seitenansicht;
- Fig. 2: das erfindungsgemäße Anschlußelement in Draufsicht in einer geschwenkten, zweiten Stellung und

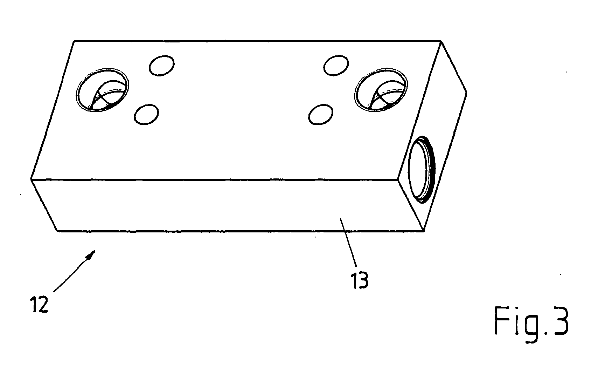

- Fig. 3: das Überdruckventil des erfindungsgemäßen Anschlußelementes in einer räumlichen Ansicht.

In den Figuren ist das erfindungsgemäße Anschlußelement mit 1 bezeichnet und besteht im Wesentlichen aus zwei Hydraulikschläuchen 2, die mit ihren einen Enden mit dem Hydraulikaggregat und mit den anderen Enden mit dem hydraulisch betriebenen Element verbunden werden. Zu diesem Zweck sind die Enden der Schläuche mit Anschlußflanschen 3 versehen, die eine derartige Verbindung ermöglichen.

Das Anschlußelement 1 besteht zusätzlich aus einer Deichsel 4, die einen Führungshalter 5 trägt, wobei der Führungshalter 5 dazu vorgesehen ist, die Hydraulikschläuche 2 derart zu unterstützen, daß sie auf dem Weg zwischen dem Hydrauliaggregat und dem hydraulisch betriebenen Element nicht durchhängen. Vorteilhafterweise ist die Deichsel 4 an ihrem einen Ende über eine Halterung 14 schwenkbar mit dem das Hydraulikaggregat tragenden Gestell 15 verbunden.

Erfindungsgemäß ist das Anschlußelement 1 ein in sich geschlossenes System, bestehend aus den Hydraulikschläuchen 2, der Deichsel 4, dem Führungshalter 5 und einer Tragplatte 6, über die das Anschlußelement 1 mit dem das Hydraulikaggregat tragenden Gestell 15 verbunden ist. Bei dem Anschlußelement 1 handelt es sich um eine austauschbare Einheit. Die Tragplatte 6 weist Langlöcher 7 zur Befestigung an dem Gestell 15 auf. Die Deichsel 4 selbst ist über die Halterung 14 ebenfalls an dieser Tragplatte 6 befestigt sowie die Hydraulikschläuche 2.

In einem ersten nicht dargestellten Ausführungsbeispiel hat die Tragplatte eine senkrechte Anordnung und die Hydraulikschläuche werden rechtwinklig von der Tragplatte weggeführt. Die Deichsel selbst ist unter- oder oberhalb der Schläuche an der Tragplatte befestigt, so daß sie beim Schwenken nicht mit den Schläuchen kollidiert. Die senkrecht von den der Tragplatte weggeführten Schläuche können Bewegungen in allen Richtigungen ausführen, da sie aus einem flexiblen Material bestehen und auch bei starken Biegungen nicht abknicken.

Die Länge der Deichsel 4 ist derart bemessen, daß sie sich zwischen der Tragplatte 6 und den Anschlüssen 8 für das hydraulisch betriebenen Elementes erstreckt und an ihrem Ende eine Anschlußplatte 9 befestigt ist, die die anderen Enden der Hydraulikschläuche 2 unterstützend aufnimmt. Die Enden der Hydraulikschläuche gehen in Anschlußflansche 3 über, an denen die Anschlüsse 8 vom hydraulischen Element mittels eines Kupplungsstückes leicht befestigbar sind. Je nach Länge der Deichsel 4 ist an ihr ein oder mehrere Führungshalter 5 befestigt, der quer zur Ausrichtung der Deichsel 4 angeordnet ist und Halterungsmöglichkeiten für die Schläuche 2 bietet. Diese Halterung 10 weist an ihren beiden Enden im einfachen Fall Öffnungen auf, die die Schläuche 2 umgreifen, und nach einer ersten Ausführungsform in dieser Öffnung 10 fest eingeklemmt werden und in einer weiteren Ausführungsform lose in den Öffnungen 10 gelagert sind, so daß sie in ihrer Längsrichtung gegenüber dem Führungshalter 5 verschieblich sind.

Es ist weiterhin vorgesehen, in dem Bereich, in dem die Schläuche 2 im Führungshalter 5 gelagert sind, in diesen Rollen anzuordnen, die eine längsbewegliche Führung des Hydraulikschlauches 2 ermöglichen, ohne daß der Schlauch 2 durch die längsbewegliche Führung einer allzu hohen Reibung ausgesetzt ist. Bei diesen Rollen handelt es sich im Wesentlichen um ein offenes Kugellager, so daß die Belastung für den Schlauch 2 minimiert werden kann.

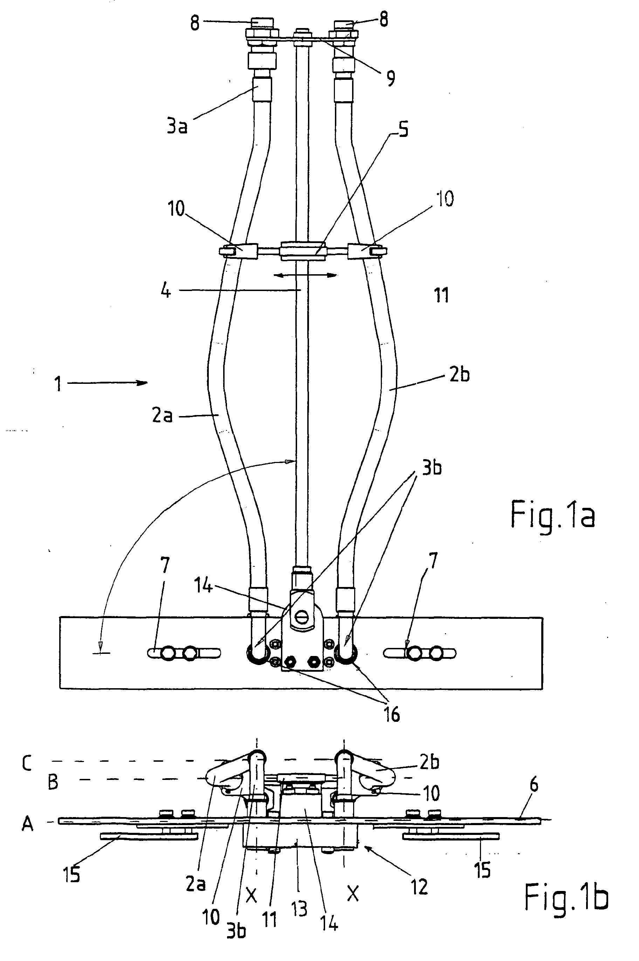

Der Führungshalter 5 ist an der Deichsel 4 querverschieblich angeordnet. Dies hat den Vorteil, daß beim Schwenken der Deichsel 4 um einen bestimmten Winkel die Länge zwischen dem Anschluß 16 zum Hydraulikaggregat und Anschluß 8 zum hydraulischen Element variabel ist. Schwenkt die Deichsel 4 in die eine Richtung (siehe Fig. 2) wird zum Ausgleich der Wegstrecke zwischen dem Anschluß 16 des in der Figur linken Schlauches 2a und der Anschlußplatte 9 beziehungsweise Anschluß 8 zum hydraulischen Element diese Seite des Führungshalters 5 zur Deichsel 4 hin verschoben, während zur Verlängerung der Wegstrecke zwischen dem Anschluß 16 des rechten Schlauches 2b und der Anschlußplatte 9 beziehungsweise Anschluß 8 zum hydraulischen Element die Aufnahme des Führungshalters 5 für den Schlauch 2b von der Deichsel 4 weggeführt wird. Auf diese Weise wird ein Schwenkwinkel von der Ausgangslage der Deichsel 4 nach Fig. 1a > 90° (ca. 100°) in die eine sowohl in die andere Richtung ermöglicht.

Nach einem der dargestellten Ausführungsbeispiele der Erfindung liegt die Tragplatte 6 in einer Ebene A parallel zur Erstreckungsrichtung der Deichsel 4 und Hydraulikschläuche 2, wobei die Hydraulikschläuche 2 über abgewinkelte Anschlußflansche 3b mit der Tragplatte 6 verbunden sind. Um die Schläuche 2 beim Schwenken der Deichsel 4 nicht allzu großen Biegebelastungen auszusetzen, sind diese abgewinkelten Anschlußflansche 3b drehbar auf der Tragplatte 6 befestigt. Die Belastung für die Schläuche 2 wird dadurch verringert.

Es ist vorteilhaft, wenn der Schenkel des Anschlußflansches 3b, um dessen Achse X gedreht wird, kürzer oder länger ist als der Abstand zwischen der Tragplattenebene A und Schwenkebene B der Deichsel 4, so daß bei geschwenkter Deichsel 4 diese ober- oder unterhalb der Schwenkebene C der Hydraulikschläuche 2 liegt. Diese zweite Ausführung ist gegenüber der ersten Ausführung dadurch verbessert, daß die Belastung der Schläuche 2 verringert wird.

Die Führung für den Führungshalter 5 besteht im einfachsten Fall aus einer Öffnung in der Deichsel 4, in der der Führungshalter 5 hin und her verschiebbar ist. Nach weiteren Ausführungsformen ist dafür eine gesonderte Schiene 11 vorgesehen, die bei unterschiedlicher Zugbelastung sowohl auf der rechte als auch auf der linken Seite der Halterung 10 für den Schlauch 2 nicht verkanten kann. Es soll in jedem Fall eine freie Längsbeweglichkeit des Führungshalters 5 bestehen.

Es ist günstig, den Führungshalter 5 beziehungsweise die Schiene 11, in der er geführt ist, entlang der Deichsel 4 verschieblich zu halten. Vorteilhafterweise sind Befestigungsmittel vorgesehen, mit denen er an jeder Stelle der Deichsel 4 fixiert werden kann.

Auch ist es möglich, die Deichsel teleskopartig zu gestalten, derart, daß der Abstand zwischen Fahrzeug und hänger voll überbrückt werden kann. Die gegebenenfalls zu langen Schläuche winden sich etwas, jedoch durch die Führung durch den Führungshalter wird auch so verhindert, daß die Schläuche allzusehr durchhängen.

Wie in der Fig. 1b zu erkennen ist, ist auf der Rückseite der Tragplatte 6 ein Überdruckventil 12 in einem Gehäuse 13 angeordnet, das einen Druckausgleich zwischen den beiden Hydraulikschläuchen 2 ermöglicht. Dieses Überdruckventil 12 gehört zu der Einheit des Anschlußelementes 1, das komplett zwischen dem Hydraulikaggregat und dem hydraulisch betriebenen Element einsetzbar ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

Der Anmelder behält es sich vor, für einzelne Gegenstände, die im Rahmen dieser Anmeldung beschrieben worden sind, eigenständigen Schutz zu beanspruchen und hierbei auf den gesamten Schatz von Merkmalen jeweils einzeln, zurückgreifen zu können.

## Patentansprüche

1. Anschlusselement für ein Hydraulikaggregat, beispielsweise einer Hydraulikpumpe oder dergleichen zum Verbinden mit einem hydraulisch betriebenen Element wie einem Hydraulikzylinder, wobei das Anschlusselement Bewegungen zwischen dem Hydraulikaggregat und dem hydraulisch betriebenen Element zulässt, bestehend aus einer schwenkbaren Deichsel und Hydraulikschläuchen, die an der Deichsel im wesentlichen parallel entlangeführt sind und die Deichsel einen Führungshalter für die Schläuche aufweist, **dadurch gekennzeichnet, daß** der Führungshalter (5) gegenüber der Deichsel (4) verschiebbar ist.

2. Anschlußelement nach Anspruch 1, **dadurch gekennzeichnet, daß** der Führungshalter (5) längs- und/oder querbeweglich bezüglich der Deichsel ist.

3. Anschlußelement nach einem oder beiden der vorhergehenden Ansprüche, **dadurch gekennzeichnet, daß** der Führungshalter (5) sich quer zur Deichsel erstreckt und/oder der Führungshalter (5) sich beidseits der Deichsel (4) erstreckt und/oder der Führungshalter (5) im Mittelbereich der Deichsel (4) angeordnet ist und/oder der Führungshalter (5) zumindest eine Führung zur Aufnahme des Hydraulikschlauchs (2) aufweist und/oder der Führungshalter (5) Rollen, insbesondere ein offenes Kugellager für eine längsbewegliche Führung des Hydraulikschlauches (2) aufweist.

4. Anschlusselement nach einem oder mehreren der vorhergehenden Ansprüche, **dadurch gekennzeichnet, daß** der Hydraulikschlauch (2) von dem Führungshalter (5) fest aufgenommen ist und/oder die Hydraulikschläuche (2) über abgewinkelte Fittinge (3b) mit den Anschlussflanschen (3) verbunden sind und/oder die Länge der Hydraulikschläuche (2) größer ist als die Länge der Deichsel (4) und/oder zwei Hydraulikschläuche (2) vorgesehen sind.

5. Anschlusselement nach einem oder mehreren der vorhergehenden Ansprüche, **dadurch gekennzeichnet, daß** die Deichsel (4) an einer Tragplatte (6) beweglich, insbesondere verschwenkbar und/oder längsbeweglich befestigt ist.

6. Anschlusselement nach einem oder mehreren der vorhergehenden Ansprüche, **dadurch gekennzeichnet, daß** auf der Tragplatte (6) Anschlussflansche (3) für die Hydraulikschläuche (2) vorgesehen sind.

7. Anschlusselement nach einem oder mehreren der vorhergehenden Ansprüche, **dadurch gekennzeichnet, daß** die Fittinge (3b) gegenüber der Tragplatte (6) schwenkbar sind und/oder die Schwenkachsen (X) der Fittinge (3b) im Wesentlichen rechtwinklig zur Erstreckungsrichtung der Hydraulikschläuche (2) ausgerichtet sind.

8. Anschlusselement nach einem oder mehreren der vorhergehenden Ansprüche, **dadurch gekennzeichnet, daß** die Deichsel (4) an ihrem der Tragplatte (6) gegenüberliegenden Ende eine weitere, als Anschlussplatte (9) zur Verbindung des Anschlusselementes (1) mit dem Hydraulikaggregat dienenden Führungshalter aufweist und/oder die Drehachse der Deichsel (14) zwischen den Drechachsen der Fittinge (3b) und dem Führungshalter (5) ist.

9. Anschlusselement nach einem oder mehreren der vorhergehenden Ansprüche, **dadurch gekennzeichnet, daß** die Tragplatte (6) zum Verbinden des Anschlusselementes (1) an dem Gestell eines Fahrzeugs dient und/oder die Tragplatte (6) Löcher, insbesondere Langlöcher (7) zur variablen Fixierung des Anschlusselementes (1) gegenüber dem hydraulischen Element aufweist.

10. Anschlusselement nach einem oder mehreren der vorhergehenden Ansprüche, **dadurch gekennzeichnet, daß** das Anschlusselement (1) Teil der Hydraulikleitung zwischen dem Hydraulikaggregat und dem hydraulischen Element ist.

11. Anschlusselement nach einem oder mehreren der vorhergehenden Ansprüche, **dadurch gekennzeichnet, daß** die Schwenkebene (C) der Hydraulikschläuche (2) über oder unter der Schwenkebene (B) der Deichsel (4) liegt und/oder mit der Anordnung der Deichsel (4) und der Hydraulikschläuche (2) ein zweiseitiger Schwenkbereich von über je 90° besteht.

12. Anschlusselement insbesondere nach einem oder mehreren der vorhergehenden Ansprüche für ein Hydraulikaggregat, beispielsweise einer Hydraulikpumpe oder dergleichen zum Verbinden mit einem hydraulisch betriebenen Element wie einem Hydraulikzylinder, wobei das Anschlusselement Bewegungen zwischen dem Hydraulikaggregat und dem hydraulisch betriebenen Element zulässt, bestehend aus einer schwenkbaren Deichsel und Hydraulikschläuchen, die an der Deichsel im wesentlichen parallel entlanggeführt sind und die Deichsel einen Führungshalter für die Schläuche aufweist, **dadurch gekennzeichnet, daß** ein Überdruckventil (12) vorgesehen ist.

13. Anschlusselement nach einem oder mehreren der vorhergehenden Ansprüche, **dadurch gekennzeichnet, daß** das Überdruckventil (12) an oder unter der Tragplatte (6) angeordnet ist und/oder das Überdruckventil (12) in einem Gehäuse (13) auf der den Anschlüssen der Hydraulikschläuche (2) gegenüberliegenden Seite der Tragplatte (6) angeordnet ist und/oder das Überdruckventil (12) eine Verbindung zwischen den beiden Hydraulikschläuchen (2) herstellt.

14. Hydrauliksystem, bestehend aus einem Hydraulikaggregat, beispeilsweise einer Hydraulikpumpe und einem mit dem Aggregat verbundenen hydraulisch betriebenen Element, wie einem Hydraulikzylinder oder ähnlichem, **gekennzeichnet durch** ein Anschlusselement nach einem oder mehreren der vorhergehenden Ansprüche (1) zum flexiblen Verbinden des Hydraulikaggregats mit dem hydraulischen Element nach einem oder mehreren der vorhergehenden Ansprüche.
